# EUROPÄISCHE PATENTSCHRIFT

(11) **EP 3 180 818 B1**
(45) Veröffentlichungstag und Bekanntmachung des Hinweises auf die Patenterteilung: **13.11.2019**
(21) Anmeldenummer: 15724277.7
(22) Anmeldetag: 21.05.2015
(51) Int. Cl.: H01R 43/16, H01R 13/03, B23K 20/12, C23C 26/00, H01R 4/62, H01R 43/02, H01R 11/12, H01R 4/02

(54) **VERFAHREN ZUR HERSTELLUNG EINES ELEKTRISCHEN ANSCHLUSSELEMENTS**
METHOD FOR PRODUCING AN ELECTRICAL CONNECTION ELEMENT
PROCÉDÉ DE PRODUCTION D'UN ÉLÉMENT DE CONNEXION ÉLECTRIQUE

(30) Priorität: 13.08.2014 DE 102014011887
(43) Veröffentlichungstag der Anmeldung: 21.06.2017
(73) Patentinhaber: Auto-Kabel Management GmbH, 79688 Hausen i.W. (DE)
(72) Erfinder: DÖREN, Jens, 52428 Jülich (DE)
(74) Vertreter: Cohausz & Florack
(86) Internationale Anmeldenummer: PCT/EP2015/061221
(87) Internationale Veröffentlichungsnummer: WO 2016/023653

(56) Entgegenhaltungen:
- EP-A1- 0 666 614
- EP-A2- 0 474 455
- WO-A1-2006/051121
- DE-A1-102006 055 994
- DE-A1-102012 006 641
- DE-A1-102012 006 641
- DE-B3-102006 050 709
- DE-U1-202008 017 220
- DE-U1-202008 017 220
- FR-A- 1 365 426
- NICHOLAS E D ET AL: "Metal deposition by friction welding", WELDING JOURNAL, AMERICAN WELDING SOCIETY, MIAMI, FL, US, vol. 231, no. 8, 1 January 1986 (1986-01-01), pages 17-27, XP002467155, ISSN: 0043-2296

## Beschreibung

Der Gegenstand betrifft ein Verfahren zur Herstellung eines elektrischen Anschlusselements.

Aus der DE 10 2006 050 709 B3 ist eine Kraftfahrzeugenergieleitung, insbesondere eine Kraftfahrzeugbatterieleitung aus zwei miteinander stoffschlüssig verbundenen Flachteilen bekannt. Die beiden Flachteile sind mit einer Isolationsschicht ummantelt und an ihrer jeweils abisolierten Stelle mit Hilfe eines Rotationsschweißverfahrens über einen Reibschweißpunkt stoffschlüssig miteinander verbunden.

Aus der XP 002467155, veröffentlicht in dem Journal der American Welding Society, ist neben einem Rotationsreibschweißverfahren auch ein Rotationsreibbeschichtungsverfahren zum Erreichen einer gut haftenden stoffschlüssigen Verbindung verschiedener Metalle bekannt. Vorgestellte Anwendungsmöglichkeiten dieser Methode sind unter anderem Reparaturen von metallischen Bauteilen durch das Auftragen dünner Metallschichten sowie die Auftragung von vor Korrosion schützenden Beschichtungen auf Bauteile verschiedener Geometrien.

Anschlusselemente, insbesondere Kraftfahrzeugleiteranschlusselemente sind beispielsweise aus der internationalen Veröffentlichung WO 2010/012515 A1 bekannt. Diese Anschlusselemente dienen dem Anschluss von Leitungen aus unterschiedlichen Metallen. Insbesondere dienen die Anschlusselemente der Verbindung von Aluminiumleitungen mit Kupferleitungen. Hierzu ist auf der Oberfläche des Anschlusselements eine metallische Einlage vorgesehen, die aus einem anderen Metall gebildet ist, als das Anschlusselement selbst. Hierdurch ist es möglich, das Anschlusselement einerseits an eine elektrische Leitung, beispielsweise eine Aluminiumleitung anzuschließen und auf der anderen Seite auf der metallischen Beschichtung, welche beispielsweise aus Kupfer oder einer Legierung hiervon gebildet ist, eine Kupferleitung anzuschließen.

Nachteilig bei diesem Anschlusselement ist jedoch die aufwendige und kostenintensive Herstellung. Insbesondere wird die Kontaktschicht mittels Walzplattieren auf das Anschlusselement aufgebracht. Dieses Walzplattieren ist jedoch bei geringeren Stückzahlen erheblich zu aufwendig.

Um auch für Kleinserien Anschlusselemente zur Verfügung zu stellen, welche die Verbindung unterschiedlicher Metalle ermöglichen, ist eine effizientere Beschichtung der Anschlusselemente notwendig.

Daher lag dem Gegenstand die Aufgabe zugrunde, ein Verfahren zur Herstellung eines elektrischen Anschlusselements zur Verfügung zu stellen, welches Anschlusselement sich zur Verbindung zweier elektrischer Leiter eignet und gleichzeitig prozesstechnisch einfach und effizient herstellbar ist.

Diese Aufgabe wird gegenständlich nach Anspruch 1 gelöst.

Es hat sich herausgestellt, dass ein zu dem herkömmlichen Walzplattieren alternativer Prozess das Aufbringen der Kontaktschicht mittels Reibbeschichten besonders günstig ist. Das Substrat, aus welchem das Flachteil des Anschlusselements gebildet ist, wird dabei mittels Reibbeschichten metallisch mit einer Kontaktschicht beschichtet. Hierbei ist es möglich, die Kontaktschicht vorzugsweise in einem kontinuierlichen Prozess auf das Substrat aufzubringen. Durch das Reibbeschichten des Substrats mit dem Kontaktteil ist es auch möglich, auch Einzelteile in einem nicht kontinuierlichen Prozess effizient zu beschichten.

Beim Reibbeschichten wird über das Substrat vorzugsweise ein rotierender Stab aus dem Metall der Kontaktschicht geführt. Hierbei wird der Stab mit einer Kraft auf das Substrat aufgedrückt und in Rotation oder Oszillation versetzt. Gleichzeitig wird der Stab translatorisch entlang eines Pfades bewegt, entlang dessen die Kontaktschicht auf dem Substrat aufgebracht werden soll.

Durch die Rotation bzw. Oszillation des Stabes und die gleichzeitige Berührung mit dem Substrat entsteht Reibungswärme. Das Material des Stabes und somit das Material der Kontaktschicht hat vorzugsweise eine geringere Schmelztemperatur als das Metall des Substrats. Durch den Wärmeeintrag in die Kontaktstelle zwischen dem Stab und dem Substrat bleibt ein Teil des Materials des Stabes auf dem Substrat haften und bildet die Kontaktschicht. Gleichzeitig erfolgt eine Relativbewegung zwischen dem Stab und dem Substrat entlang des Pfades, entlang dessen die Kontaktschicht aufgebracht werden soll. Durch die Bewegung entlang dieses Pfades entsteht ein Streifen der Kontaktschicht, der an dem Substrat haftet.

Mit Hilfe des Reibbeschichtens ist es somit möglich, unterschiedliche Metalle in einem besonders kostengünstigen Prozess derart miteinander zu verbinden, dass ein Anschlusselement entsteht, welches sich zum Anschluss zweier elektrischer Leiter, insbesondere aus unterschiedlichen metallischen Werkstoffen eignet.

Nach der Erfindung ist es möglich, dass das Substrat und die Kontaktschicht aus unterschiedlichen Metallen sind, insbesondere Metallen unterschiedlicher Elektrodenpotentiale. Insbesondere ist es möglich, dass das Substrat aus Nichteisenmetall oder einer Legierung hiervon und die Kontaktschicht aus Aluminium oder einer Legierung hiervon gebildet sind. Insbesondere eignen sich Kupfer oder eine Kupferlegierung als Substrat. In diesem Fall ist es möglich, an dem Substrat eine Kupferleitung anzuordnen und an der Kontaktschicht eine Aluminiumleitung. An den jeweiligen Übergängen kann eine sortenreine Verbindung gegeben sein und Kontaktkorrosion an diesen Übergängen ist verringert oder gar vermieden.

Auch ist es nach der Erfindung möglich, das Substrat aus Aluminium oder einer Aluminiumlegierung zu bilden und die Kontaktschicht aus Nichteisenmetall oder einer Legierung hiervon, beispielsweise aus Kupfer oder einer Kupferlegierung zu bilden. Dann kann an dem Substrat ein Aluminiumleiter angeordnet werden, beispielsweise eine Aluminiumflachleitung, beispielsweise aus Vollmaterial, beispielsweise mit einem rechteckigen Querschnitt und vorzugsweise aus einem hochreinen Aluminium, beispielsweise Aluminium 99,5. An der Kontaktschicht kann eine Kontaktierung mit einem Kupferleiter erfolgen. Dadurch ist es möglich, häufig als Aluminiumleitung eingesetzte Batterieleitungen mit der Fahrzeugelektronik besonders einfach zu kontaktieren, in dem die Fahrzeugelektronik bzw. die darin verbauten Kupferleiter mit der Kontaktschicht verbunden werden.

Gemäß einem Ausführungsbeispiel wird vorgeschlagen, dass die Kontaktschicht auf einen Teil der Oberfläche des Substrats aufgebracht wird. Beim Aufbringen auf der Oberfläche des Substrats entstehen zwischen dem Substrat und der Kontaktschicht Nahtstellen. Diese Nahtstellen können die Übergänge sein, an denen die Kontaktschicht endet und das Substrat beginnt. Insbesondere kann bei einer translatorischen Bewegung zwischen Substrat und Stab entlang eines Pfades (einer Trajektorie) die Nahtstelle einen entsprechenden Pfad haben. Insbesondere ist die Schichtbreite der Kontaktschicht in etwa entsprechend dem Durchmesser des Stabs. An den jeweiligen äußeren Grenzen des Stabs entsteht die Nahtstelle zwischen dem Substrat und der Kontaktschicht.

Aus prozessökonomischen Gesichtspunkten ist es vorteilhaft, wenn die Kontaktschicht als flächiger Streifen auf dem Substrat aufgebracht ist. Vorzugsweise ist dieser flächige Streifen quer zur Längsrichtung des Flachteils auf der Oberfläche des Substrats gebildet. Der flächige Streifen hat eine Streifenbreite die dem beim Reibbeschichten wirksamen Durchmesser des Stabs entspricht. Der Verlauf des Streifens folgt dem Pfad, der durch die Relativbewegung zwischen dem Substrat und dem Stab vorgegeben ist.

Gemäß einem Ausführungsbeispiel wird vorgeschlagen, dass das Substrat zumindest teilweise mit einer Beschichtung beschichtet ist. Die Beschichtung ist vorzugsweise metallisch. Insbesondere ist die Beschichtung aus Zinn und/oder Nickel oder Legierungen hiervon gebildet. Auch kann die Beschichtung aus einer Kupferlegierung gebildet sein. Durch das Beschichten soll Kontaktkorrosion an der Nahtstelle zwischen dem Substrat und der Kontaktschicht vermieden werden. Hierzu ist es vorteilhaft, wenn die Beschichtung im Bereich der Nahtstelle angeordnet ist und die Nahtstelle bedeckt. Um jedoch eine sortenreine Verbindung auf der Kontaktschicht mit einem elektrischen Kontaktteil zu ermöglichen, ist die Kontaktschicht nicht vollständig mit der Beschichtung beschichtet. Vielmehr ist die Kontaktschicht lediglich im Bereich der Nahtstelle mit der Beschichtung beschichtet. Die Beschichtung deckt somit die Nahtstelle sowohl im Bereich der Kontaktschicht als auch im Bereich des Substrats ab. Ein Übergang zwischen der Kontaktschicht und dem Substrat ist durch die Beschichtung abgedeckt.

Wie zuvor erwähnt, ist die Kontaktschicht dazu geeignet, mit einem elektrischen Leiter oder einem anderen Kontaktteil kontaktiert zu werden. Insbesondere kann auf der Kontaktschicht ein Kontaktteil aufgeschweißt werden. Insbesondere kann das Kontaktteil mittels Ultraschallschweißen auf der Kontaktschicht aufgeschweißt werden. Dies ist insbesondere dann von Vorteil, wenn das Kontaktteil als auch die Kontaktschicht aus Aluminium oder Aluminiumlegierungen gebildet ist. Beim Ultraschallschweißen werden die dort gebildeten Aluminiumoxidschichten aufgebrochen und es entsteht ein gut leitender Übergang zwischen der Kontaktschicht und dem Kontaktteil.

Dies ist vorzugsweise dann möglich, wenn die Kontaktschicht einen Bereich frei von der Beschichtung hat. Aus diesem Grunde wird vorgeschlagen, dass die Kontaktschicht in einem zentralen Bereich, mit einem Abstand zu zumindest einer der Nahtstellen frei von der Beschichtung ist. Vorzugsweise ist die Kontaktschicht entlang aller Nahtstellen mit dem Substrat beschichtet. Die Kontaktschicht ist jedoch in einem zentralen Bereich, der einen Abstand zu den Nahtstellen hat, frei von der Beschichtung, so dass dort eine Verbindung mit einem Kontaktteil oder einem elektrischen Leiter möglich ist.

Besonders einfach lässt sich ein Anschlusselement in einem kontinuierlichen Prozess herstellen, wenn das Substrat als Band oder Blech zur Verfügung gestellt wird. Insbesondere wird das Substrat in einem kontinuierlichen Prozess als Band oder Blech zur Verfügung gestellt. Dabei wird das Substrat vorzugsweise unter einem Reibbeschichtungsstab bewegt und der Reibbeschichtungsstab bringt die Kontaktschicht kontinuierlich auf das Substrat auf. Dies kann beispielsweise in einem Endlosprozess solange erfolgen, bis das Band oder Blech vollständig verbraucht ist oder der Reibbeschichtungsstab aufgebraucht ist.

Anschließend zum Reibbeschichten kann aus dem Substrat das Flachteil herausgetrennt, beispielsweise gestanzt oder geschnitten werden.

Ist die Relativbewegung zwischen dem Reibbeschichtungsstab und dem Substrat durch den Vortrieb des Bandes oder Bleches definiert, so erfolgt das Aufbringen der Kontaktschicht entlang der Vortriebsrichtung des Bandes oder Bleches. Das Band oder Blech wird kontinuierlich unter dem Reibbeschichtungsstab vorangetrieben, während dieser rotiert oder oszilliert und mit einer Kraft auf das Substrat aufgedrückt wird.

Auch ist es möglich, dass zunächst das Flachteil aus dem noch nicht mit der Kontaktschicht beschichteten Substrat herausgetrennt wird. Anschließend an dieses Heraustrennen kann jedes einzelne Flachteil mittels Reibbeschichten mit der Kontaktschicht beschichtet werden. Dieser Prozess ist zwar etwas aufwendiger als das kontinuierliche Beschichten, eignet sich jedoch insbesondere bei Kleinserien, da das Reibbeschichten dann nicht kontinuierlich am Band oder Blech sondern einzeln an einem Einzelteil durchgeführt wird. Ein weiterer Vorteil der Einzelbeschichtung ist, dass das Heraustrennen des Flachteils aus dem Substrat sortenrein erfolgt. Das heißt, dass Ausschussware, beispielsweise beim Fehlstanzen oder Fehlschneiden der Flachteile sortenrein bleibt und einer Wiederverwertung zugeführt werden kann.

Gemäß einem Ausführungsbeispiel wird vorgeschlagen, dass ein elektrischer Leiter stoffschlüssig mit der Kontaktschicht verbunden ist. Vorzugsweise ist dies im zentralen Bereich der Fall. Dieser zentrale Bereich hat einen Abstand zu zumindest einer der Nahtstellen. Hierbei eignen sich insbesondere ein Verschweißen des Leiters bzw. des elektrischen Kontaktteils mit der Kontaktschicht. Insbesondere ein Ultraschallschweißen bietet sich hier an.

In dem Fall, in dem nach dem Beschichten des Substrats mit der Kontaktschicht das Flachteil aus dem Substrat herausgetrennt, insbesondere gestanzt wird, entsteht an den Seitenflächen des Flachteils jeweils eine Nahtstelle. Diese Seitenflächen sind dabei die Flächen des Flachteils, die an die Oberfläche angrenzen, auf die die Kontaktschicht auf das Substrat aufgebracht ist. Insbesondere entsteht an zwei gegenüberliegenden Seitenflächen des Flachteils jeweils eine Nahtstelle.

Diese Nahtstelle wird vorzugsweise ebenfalls bei einem anschließenden Beschichten mit der Beschichtung versiegelt. Das Beschichten kann ein Tauchbeschichten, ein Pulverbeschichten, ein Lackieren oder dergleichen sein. Die Nahtstelle wird dabei auch an den Seitenflächen durch die vorzugsweise metallische Beschichtung abgedeckt.

Die Kontaktschicht ist vorzugsweise in einem zentralen Bereich maskiert, das heißt, dass sie während des Beschichtens abgedeckt ist, so dass das Beschichtungsmaterial nicht unter die Abdeckung auf die Kontaktschicht gelangen kann. Insbesondere ist diese Abdeckung parallel zur Erstreckungsrichtung der Kontaktschicht. Die Abdeckung hat vorzugsweise eine etwas geringere Breite als die Kontaktschicht, so dass sich auf gegenüberliegenden Seiten der Abdeckung ein Abstand zu der Nahtstelle einstellt.

Bei einem anschließenden Beschichten deckt das Material der Beschichtung die Kontaktschicht in den nicht abgedeckten Bereichen ab, so dass die Beschichtung die Nahtstelle zwischen der Kontaktschicht und dem Substrat vollständig abdeckt. Auch an den Seitenflächen gelangt die Beschichtung an die Nahtstelle, so dass nach dem Beschichten und ggf. dem Entfernen der Abdeckung lediglich der abgedeckte Bereich der Kontaktschicht und somit der zentrale Bereich der Kontaktschicht frei von der Beschichtung ist.

Gemäß einem Aspekt wird ein Verfahren zur Herstellung eines Anschlusselements vorgeschlagen. Insbesondere ist dies ein Anschlusselement, wie dies zuvor beschrieben wurde. Hierbei wird ein Substrat mit einer Kontaktschicht beschichtet. Die Beschichtung erfolgt mittels Reibbeschichten. Beim Reibbeschichten wird vorzugsweise ein Stab oder Stift aus einem Beschichtungswerkstoff auf das Substrat aufgedrückt. Anschließend wird der Stab oder der Stift in Rotation bzw. Oszillation versetzt. Es wird eine Relativbewegung, insbesondere eine translatorische Relativbewegung, zwischen dem Substrat und dem Stab oder Stift bewirkt. Durch die Relativbewegung bewegt sich der Stab oder Stift aus dem Beschichtungswerkstoff entlang dieser Bewegungsrichtung über das Substrat. Durch die Rotation bzw. Oszillation entsteht Wärme und der Werkstoff des Stabes oder Stiftes, insbesondere Aluminium, bleibt an dem Substrat, insbesondere Kupfer, haften.

Nach dem Aufbringen der Kontaktschicht wird diese vor Kontaktkorrosion an der Nahtstelle dadurch geschützt, dass das Substrat und die Kontaktschicht mit einer vorzugsweise metallischen Beschichtung beschichtet werden. Diese Beschichtung kann beispielsweise galvanisch oder auch in einem Tauchbad erfolgen. Vorzugsweise erfolgt die Beschichtung jedoch nicht auf der kompletten Kontaktschicht sondern ein Teil der Kontaktschicht bleibt frei von der Beschichtung. Hierzu wird die Kontaktschicht in einem zentralen Bereich, in einem Abstand zu zumindest einer, vorzugsweise allen zwischen der Kontaktschicht und dem Substrat liegenden Nahtstellen frei von der Beschichtung gehalten. Dies kann durch ein Abdecken bzw. Maskieren eines Teiles der Kontaktschicht, der außerhalb der Nahtstelle liegt, erfolgen.

Gemäß einem Ausführungsbeispiel wird vorgeschlagen, dass nachdem die Kontaktschicht auf das Substrat aufgebracht wurde, die Kontaktschicht in einem zentralen Bereich in einem Abstand zu zumindest einer, vorzugsweise allen Nahtstellen maskiert und anschließend beschichtet wird. Durch das Maskieren wird verhindert, dass in dem maskierten Bereich die Beschichtung mit der Kontaktschicht in Kontakt gerät.

Gemäß einem Ausführungsbeispiel wird vorgeschlagen, dass das Substrat kontinuierlich als Band oder Blech bereitgestellt wird. Beispielsweise kann das Substrat von einem Coil abgewickelt werden. Während des Vorschubs des Substrats kann entlang der Vorschubrichtung, also entlang der Längsrichtung des Bandes oder Bleches, das Substrat mit der Kontaktschicht mittels Reibbeschichten beschichtet werden. Anschließend kann das Flachteil aus dem Band oder Blech herausgetrennt, insbesondere gestanzt oder geschnitten werden. Vor dem Heraustrennen kann jedoch die Maskierung des Bandes oder Bleches erfolgen, beispielsweise indem eine Maskierungsfolie auf einen zentralen Bereich der Kontaktschicht mit einem Abstand zu den beiden Nahtstellen auf die Kontaktschicht aufgelegt wird.

Nach dem Heraustrennen des Flachteils aus dem Band oder Blech liegt die Maskierung nach wie vor auf der Kontaktschicht auf und in einem anschließenden Beschichtungsprozess kann die Beschichtung derart erfolgen, dass der abgedeckte Bereich der Kontaktschicht nicht beschichtet wird. Nun muss nur noch die Beschichtung entfernt werden und das Anschlusselement hat einen beschichteten Bereich des Substrats und einen unbeschichteten Bereich der Kontaktschicht. Auf der Kontaktschicht kann eine sortenreine Verbindung erfolgen. Insbesondere kann die Kontaktschicht aus Aluminium sein und das Kontaktteil, das auf der Kontaktschicht angeordnet wird, ebenfalls.

Vorteilhaft ist die Verwendung eines solches Anschlusselements in einem Kraftfahrzeug, insbesondere als elektrische Kraftfahrzeugenergieleitung. In einem Kraftfahrzeug sind die elektrischen Verbindungen starken Umweltbelastungen durch Spritzwasser, Streusalz, Temperaturschwankungen und dergleichen ausgesetzt. Kontaktkorrosion durch sortenunreine Verbindungen wird dadurch beschleunigt. Um dies zu verhindern, eignet sich das gegenständliche Anschlusselement, da sortenreine Verbindungen zwischen zwei Kontaktteilen insbesondere elektrischen Leitern aus unterschiedlichen Metallen über das Anschlusselement möglich sind.

Nachfolgend wird der Gegenstand anhand einer Ausführungsbeispiele zeigenden Zeichnung näher erläutert. In der Zeichnung zeigen:
- Fig. 1: eine Draufsicht auf ein Anschlusselement nach einem Ausführungsbeispiel;
- Fig. 2: eine Schnittansicht eines Anschlusselements;
- Fig. 3: eine weitere Schnittansicht eines Anschlusselements;
- Fig. 4: einen schematischen Aufbau einer Herstellungsanlage.

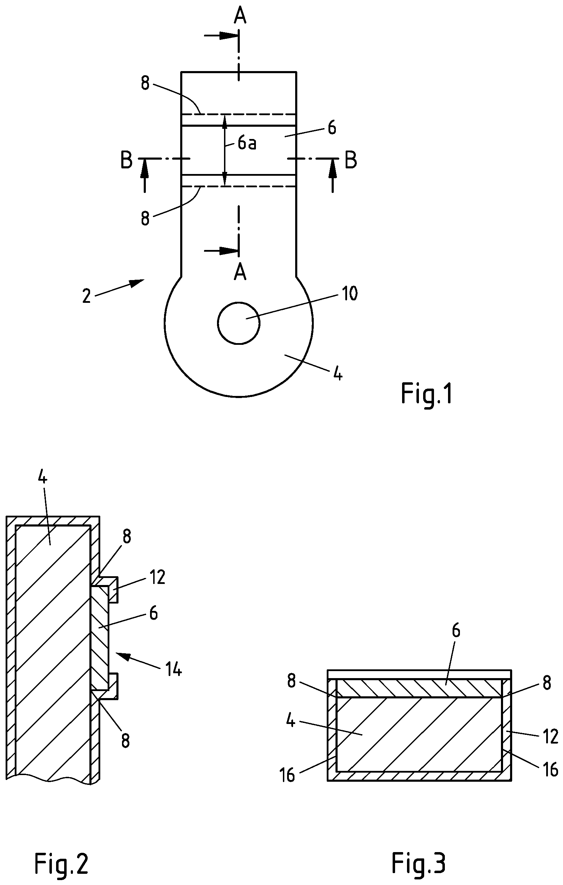

Figur 1 zeigt ein Anschlusselement 2 welches aus einem Flachteil 4 und einer Kontaktschicht 6 gebildet ist. Das Anschlusselement 2 ist vorzugsweise ein Kraftfahrzeugleiteranschlusselement 2. Nachfolgend wird stellvertretend für jedes andere Anschlusselement ein Kraftfahrzeugleiteranschlusselement 2 beschrieben. Das Kraftfahrzeugleiteranschlusselement 2 hat, wie in der Figur 1 gezeigt, zwei Nahtstellen 8 zwischen dem Substrat des Flachteils 4 und einer Kontaktschicht 6. Die Nahtstellen 8 sind in der Figur 1 gestrichelt dargestellt, da über die Nahtstellen 8 eine Beschichtung auf dem Anschlusselement 2 aufgebracht ist. Die Beschichtung ist vorzugsweise eine metallische Beschichtung. Insbesondere kann die Beschichtung aus Zinn, Nickel, Legierungen davon oder dergleichen gebildet sein.

Wie in der Figur 1 dargestellt, kann das Anschlusselement 2 als Anschlussfahne gebildet sein und eine Bohrung 10 zur Aufnahme beispielsweise einer Schraube oder eines Bolzens aufweisen.

Die Kontaktschicht 6 ist auf das Anschlusselement 2 mittels Reibbeschichten aufgebracht. Hierzu wird auf der Oberfläche des Flachteils 4 ein Grundwerkstoff aufgerieben. Der Grundwerkstoff wird über einen Reibstab oder Reibstift zur Verfügung gestellt und bleibt an dem Substrat des Flachteils 4 haften. Die Breite 6a der Kontaktschicht 6 ergibt sich aus dem beim Reibbeschichten wirksamen Durchmesser des Reibstabes bzw. Reibstiftes. An den äußeren Enden der Kontaktschicht 6 entstehen die Nahtstellen 8.

Figur 2 zeigt eine Schnittansicht A-A durch das Anschlusselement 2 gemäß der Figur 1. Zu erkennen ist, dass die Kontaktschicht 6 auf einer Oberfläche des Substrats des Flachteils 4 aufgetragen ist. An den äußeren Rändern der Kontaktschicht 6 entstehen Nahtstellen 8 zwischen dem Flachteil 4 und der Kontaktschicht 6, an denen Feuchtigkeit angreifen kann und Kontaktkorrosion zunächst entstehen kann.

Um diese Nahtstellen 8 zu schützen, insbesondere da die Stärke der Kontaktschicht 6 einige Mikrometer bis einige Millimeter ist und schnell durch Kontaktkorrosion zerstört werden kann, wird die Kontaktschicht mit einer metallischen Beschichtung 12 im Bereich der Nahtstellen 8 beschichtet. Gezeigt ist eine Beschichtung 12 vollständig auf dem Flachteil 4, sie kann aber auch nur auf einem Teilbereich der Oberfläche des Flachteils 4 erfolgen. Beim Beschichten kann beispielsweise eine galvanische Beschichtung, eine Beschichtung mittels Tauchlackieren, eine Beschichtung mittels Pulverbeschichten oder eine sonstige Beschichtungsmethode zum Einsatz kommen.

Ferner ist in der Figur 2 zu erkennen, dass ein zentraler Bereich 14 der Kontaktschicht 6 frei von der Beschichtung 12 ist. Der zentrale Bereich 14 hat einen Abstand zu den Nahtstellen 8.

Figur 3 zeigt eine Schnittansicht B-B durch das Anschlusselement 2 gemäß der Figur 1. Zu erkennen ist, dass an den Seitenflächen 16 des Flachteils 4 die metallische Beschichtung 12 die Nahtstellen 8 vollständig bedeckt.

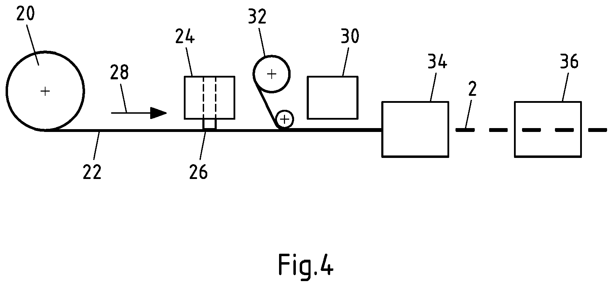

Figur 4 zeigt die Herstellung eines Anschlusselements. Zunächst kann von einem Coil 20 ein Band 22 abgerollt werden. Das Band 22 ist vorzugsweise wenige Zentimeter breit und hat eine Stärke von wenigen Millimetern.

Das Band 22 wird zunächst an einer Reibbeschichtungsvorrichtung 24 in Vorschubrichtung 28 vorbei geführt. In der Reibbeschichtungsvorrichtung 24 wird ein Reibstab 26, der beispielsweise aus Aluminium gebildet ist, auf das Band 22, das beispielsweise aus Kupfer gebildet ist, aufgedrückt und gleichzeitig in Rotation versetzt. Das Band 22 wird in der Bewegungsrichtung 28 unter dem Stab 26 hindurch geführt, während dieser rotiert oder oszilliert. Durch das Rotieren oder Oszillieren des Stabes 26 und das Aufdrücken auf das Band entsteht an der Kontaktstelle Wärme und der Werkstoff des Stabes 26 bleibt als Kontaktschicht 6 auf dem Band 22 haften.

Anschließend kann das mit der Kontaktschicht 6 beschichtete Band 22 einer Maskiervorrichtung 30 zugeführt werden. In dieser wird ein Schutzelement 32, beispielsweise in der Art einer Klebefolie oder einer sonstigen folienartigen Beschichtung auf den zentralen Bereich 14 der Kontaktschicht 6 aufgebracht und dort befestigt.

Anschließend wird das maskierte und beschichtete Band 22 einer Stanze 34 zugeführt. In der Stanze 34 werden die Anschlusselemente 2 aus dem Band 22 herausgestanzt und beispielsweise als gegurtete Ware oder als Schüttgut einer Beschichtungsvorrichtung 36 zugeführt.

In der Beschichtungsvorrichtung 36 wird das Anschlusselement 2 beschichtet. Durch die zuvor aufgebrachte Maskierung wird der zentrale Bereich 14 der Kontaktschicht 6 nicht mitbeschichtet.

Anschließend kann die Maskierung entfernt werden und das Anschlusselement 2 ist im zentralen Bereich 14 der Kontaktschicht 6 frei von der Beschichtung 12 und ansonsten vollumfänglich mit der Beschichtung 12 beschichtet.

Mit einem solchen Anschlusselement ist es möglich, eine Aluminiumleitung mit einer Kupferleitung zu verbinden und dabei sortenreine Verbindungen an dem Anschlusselement zu gewährleisten.

## Patentansprüche

1. Verfahren zur Herstellung eines Elektrischen Anschlusselements (2) umfassend
- Bereitstellen eines ersten Flachteils (4) aus einem metallischen Substrat, und
- Aufbringen eine metallischen Kontaktschicht (6) auf einer auf einer Oberfläche des Substrats,
wobei das Substrat und die Kontaktschicht (6) aus unterschiedlichen Metallen gebildet sind, nämlich das Substrat aus Kupfer oder einer Kupferlegierung und die Kontaktschicht (6) aus Aluminium oder einer Aluminiumlegierung gebildet ist oder das Substrat aus Aluminium oder einer Aluminiumlegierung und die Kontaktschicht (6) aus Kupfer oder einer Kupferlegierung gebildet ist,
**dadurch gekennzeichnet, dass**
- das Substrat mit der Kontaktschicht (6) reibbeschichtet wird,
wobei das Material der Kontaktschicht (6) von einem die Reibbeschichtung aufbringenden rotierenden Stab abgetragen wird.

2. Verfahren nach einem der vorangehenden Ansprüche,
**dadurch gekennzeichnet,**
**dass** die Kontaktschicht (6) auf einem Teil der Oberfläche des Substrats derart aufgebracht wird, dass auf der Oberfläche zumindest eine Nahtstelle (8) zwischen dem Substrat und der Kontaktschicht (6) gebildet ist, wobei vorzugsweise zusätzlich das Substrat zumindest teilweise mit einer vorzugsweise metallischen Beschichtung (12) beschichtet wird, derart, dass die Beschichtung (12) zumindest die Nahtstelle (8) zwischen der Kontaktschicht (6) und dem Substrat bedeckt, wobei insbesondere die Kontaktschicht (6) im Bereich der Nahtstelle (8) mit der Beschichtung (12) beschichtet wird.

3. Verfahren nach einem der vorangehenden Ansprüche,
**dadurch gekennzeichnet,**
**dass** die Kontaktschicht (6) als flächiger Streifen quer zur Längsrichtung des Flachteils (4) auf der Oberfläche des Substrats gebildet wird und/oder dass die Kontaktschicht (6) in einem zentralen Bereich (14), mit einem Abstand zu einer Nahtstelle (8) zwischen den Substrat und der Kontaktschicht (6), frei von der Beschichtung (12) wird.

4. Verfahren nach einem der vorangehenden Ansprüche,
**dadurch gekennzeichnet,**
**dass** das Substrat als kontinuierliches Band oder Blech kontinuierlich mit der Kontaktschicht (6) beschichtet wird, wobei aus dem mit der Kontaktschicht (6) beschichteten Substrat das Flachteil (4) herausgetrennt wird und/oder die Kontaktschicht (6) entlang der Erstreckungsrichtung des kontinuierlichen Bandes oder Bleches auf das Substrat aufgebracht wird.

5. Verfahren nach einem der vorangehenden Ansprüche,
**dadurch gekennzeichnet,**
**dass** das Flachteil (4) aus dem unbeschichteten Substrat herausgetrennt wird und dass die Kontaktschicht (6) auf das herausgetrennte Flachteil (4) aufgebracht wird.

6. Verfahren nach einem der vorangehenden Ansprüche,
**dadurch gekennzeichnet,**
**dass** ein elektrisches Kontaktteil stoffschlüssig mit der Kontaktschicht (6), insbesondere im zentralen Bereich (14) mit Abstand zu der Nahtstelle (8), verbunden wird, insbesondere dass das elektrische Kontaktteil mittels Schweißen mit der Kontaktschicht (6) verbunden wird.

7. Verfahren nach einem der vorangehenden Ansprüche,
**dadurch gekennzeichnet,**
**dass** zwischen der Kontaktschicht (6) und dem Substrat an zumindest einer Seitenfläche (16) des Flachteils (4) eine Nahtstelle (8) gebildet wird und dass das Flachteil (4) im Bereich der Seitenfläche (16) mit der vorzugsweise metallischen Beschichtung (12) beschichtet wird, derart, dass zumindest die Nahtstelle (8) mit der Beschichtung (12) beschichtet ist.

8. Verfahren nach einem der vorangehenden Ansprüche,
**dadurch gekennzeichnet,**
**dass** die Beschichtung (12) galvanisch aufgebracht wird.

## Claims

1. Method of manufacturing an electrical connection element (2) comprising
- providing a first flat part (4) of a metallic substrate, and
- coating of a metallic contact layer (6) on a surface of the substrate,
wherein the substrate and the contact layer (6) are formed of different metals, namely the substrate is formed of copper or a copper alloy and the contact layer (6) is formed of aluminium or an aluminium alloy, or the substrate is formed of aluminium or an aluminium alloy and the contact layer (6) is formed of copper or a copper alloy,
**characterized in that**
- the substrate is friction-coated with the contact layer (6), wherein
- the material of the contact layer (6) being removed by a rotating rod applying the friction coating.

2. Method according to one of the preceding claims,
**characterized in that**
the contact layer (6) is applied to a part of the surface of the substrate in such a way that at least one seam (8) is formed on the surface between the substrate and the contact layer (6), wherein
the substrate preferably being additionally coated at least partially with a preferably metallic coating (12), in such a way that the coating (12) covers at least the seam (8) between the contact layer (6) and the substrate, wherein in particular the contact layer (6) being coated with the coating (12) in the region of the seam (8).

3. Method according to one of the preceding claims,
**characterized in that**
the contact layer (6) is formed as a flat strip on the surface of the substrate transversely to the longitudinal direction of the flat part (4) and/or **in that** the contact layer (6) becomes free of the coating (12) in a central region (14) at a distance from a seam (8) between the substrate and the contact layer (6).

4. Method according to one of the preceding claims,
**characterized in that**
the substrate is continuously coated with the contact layer (6) as a continuous strip or sheet metal, wherein the flat part (4) being separated from the substrate coated with the contact layer (6), and/or
the contact layer (6) is applied to the substrate along the direction of extension of the continuous strip or sheet.

5. Method according to one of the preceding claims,
**characterized in that**
the flat part (4) is separated from the uncoated substrate and **in that** the contact layer (6) is applied to the separated flat part (4).

6. Method according to one of the preceding claims,
**characterized in that**
an electrical contact part is connected in a material-locking manner to the contact layer (6), in particular in the central region (14) with a distance from the seam (8), in particular **in that** the electrical contact part is connected to the contact layer (6) by means of welding.

7. Method according to one of the preceding claims,
**characterized in that**
a seam (8) is formed between the contact layer (6) and the substrate on at least one side surface (16) of the flat part (4), and **in that** the flat part (4) is coated with the preferably metallic coating (12) in the region of the side surface (16) in such a way that at least the seam (8) is coated with the coating (12).

8. Method according to one of the preceding claims,
**characterized in that**
the coating (12) is applied galvanically.

## Revendications

1. Procédé de fabrication d'un élément de connexion électrique (2), ledit procédé consistant :
- à fournir une première pièce plate (4) se composant d'un substrat métallique, et
- à appliquer une couche de contact (6) métallique sur une surface du substrat,
où le substrat et la couche de contact (6) sont formés à partir de métaux différents, en effet le substrat est formé en se composant de cuivre ou d'un alliage de cuivre, et la couche de contact (6) est formée en se composant d'aluminium ou d'un alliage d'aluminium, ou bien le substrat est formé en se composant d'aluminium ou d'un alliage d'aluminium, et la couche de contact (6) est formée en se composant de cuivre ou d'un alliage de cuivre,
**caractérisé**
**en ce que** le substrat est recouvert par friction de la couche de contact (6), où le matériau de la couche de contact (6) est enlevé par une barre rotative appliquant le revêtement de friction.

2. Procédé selon la revendication 1,
**caractérisé**
**en ce que** la couche de contact (6) est appliquée sur une partie de la surface du substrat, de manière telle qu'au moins un cordon de soudure (8) disposé sur la surface soit formé entre le substrat et la couche de contact (6), où, de préférence, le substrat est recouvert en outre, au moins en partie, d'un revêtement (12) de préférence métallique, de manière telle que le revêtement (12) recouvre au moins le cordon de soudure (8) formé entre la couche de contact (6) et le substrat, où en particulier la couche de contact (6) est recouverte du revêtement (12), dans la zone du cordon de soudure (8).

3. Procédé selon l'une des revendications précédentes,
**caractérisé**
**en ce que** la couche de contact (6) est formée, sur la surface du substrat, comme une bande de grande étendue disposée de façon transversale par rapport à la direction longitudinale de la partie plate (4) et/ou
**en ce que** la couche de contact (6), dans une zone centrale (14), à une distance par rapport à un cordon de soudure (8) formé entre le substrat et la couche de contact (6), est exempte du revêtement (12).

4. Procédé selon l'une quelconque des revendications précédentes,
**caractérisé**
**en ce que** le substrat, en tant que bande ou tôle continue, est recouvert en continu de la couche de contact (6), où la pièce plate (4) est détachée du substrat recouvert de la couche de contact (6) et/ou **en ce que** la couche de contact (6) est appliquée sur le substrat, le long de la direction d'étendue de la bande ou de la tôle continue.

5. Procédé selon l'une quelconque des revendications précédentes,
**caractérisé**
**en ce que** la pièce plate (4) est détachée du substrat non recouvert et **en ce que** la couche de contact (6) est appliquée sur la pièce plate (4) détachée.

6. Procédé selon l'une quelconque des revendications précédentes,
**caractérisé**
**en ce qu'**une pièce de contact électrique est assemblée, par continuité de matériau, avec la couche de contact (6), en particulier dans la zone centrale (14), à distance par rapport au cordon de soudure (8), en particulier **en ce que** la pièce de contact électrique est assemblée par soudage avec la couche de contact (6).

7. Procédé selon l'une quelconque des revendications précédentes,
**caractérisé**
**en ce qu'**un cordon de soudure (8) disposé entre la couche de contact (6) et le substrat est formé sur au moins une surface latérale (16) de la pièce plate (4), et **en ce que** la pièce plate (4) est recouverte, dans la zone de la surface latérale (16), du revêtement (12) de préférence métallique, de manière telle qu'au moins le cordon de soudure (8) soit recouvert du revêtement (12).

8. Procédé selon l'une quelconque des revendications précédentes,
**caractérisé**
**en ce que** le revêtement (12) est appliqué par galvanisation.
